# EUROPEAN PATENT APPLICATION

(11) **EP 4 410 396 A1**
(43) Date of publication of application: **07.08.2024**
(21) Application number: 22875652.4
(22) Date of filing: 23.08.2022
(51) Int. Cl.: B01D 9/02, H01M 4/505, H01M 4/525

(54) **CRYSTALLIZATION METHOD AND CRYSTALLIZATION APPARATUS**

(30) Priority: 28.09.2021 JP 2021157460
(71) Applicant: Tsukishima Kikai Co., Ltd., Tokyo 104-0053 (JP)
(72) Inventor: DOYA Yo, Tokyo 104-0053 (JP)
(74) Representative: Müller-Boré & Partner Patentanwälte PartG mbB
(86) International application number: PCT/JP2022/031670
(87) International publication number: WO 2023/053780

(57) **Abstract**

In a crystallization method including forming a circulation path (12) between a main reaction unit (11) and a thickening reaction tank (13), and performing reaction crystallization, the circulation path (12) includes an inflow path (12a) from the main reaction unit (11) to the thickening reaction tank (13), and an outflow path (12b) from the thickening reaction tank (13) to the main reaction unit (11), a stirring zone (14) to which the inflow path (12a) and the outflow path (12b) are connected is provided in a lower portion of the thickening reaction tank (13), a clarification zone (18) in which a supernatant is generated is provided in an upper portion of the thickening reaction tank (13), and a thickening zone (17) in which particles are settled is provided between the stirring zone (14) and the clarification zone (18).

## Description

### [Technical Field]

The present invention relates to a crystallization method and a crystallization apparatus.

Priority is claimed on Japanese Patent Application No. 2021-157460, filed September 28, 2021, the content of which is incorporated herein by reference.

### [Background Art]

The use of micron-sized spherical particle bodies obtained by aggregation and growth of nanometer-sized to submicron-sized primary particles is often seen in fillers to functional materials or materials such as battery materials, catalysts, medical raw materials, or cosmetic materials. Particularly, in a case where a filling property and a filling density are important, spheroidizing of particles to be produced and a particle size distribution thereof are considered important. In order to increase the filling density, an optimal combination of large and small particle diameters is examined, and a broad particle size distribution is often required. Meanwhile, particles having a uniform particle diameter are often required to make particle functions uniform, and materials having a narrow particle size distribution are also often required to uniformly distribute particles in a material. A positive electrode material for an all-solid-state battery expected as a future technology is also one of them. Various methods such as a method for separating a product in a classification step, a method for carrying out crystallization while separating large and small particle diameters, a method for adding seed particles (seed crystals) in advance, and the like are conceived in order to obtain particles having a uniform particle diameter. At the same time, a method for controlling a particle diameter by an operation of increasing the number of particles or a suspension density in a solution in a crystallization operation is also conceived. In addition, a method for increasing a raw material concentration in advance is also provided, but there is a limit to an operation of increasing the raw material concentration because the amount of byproducts to be generated also increases.

In Patent Document 1, a method for increasing a slurry concentration and maintaining a particle size distribution constant by thickening discharged particles and returning the particles to a crystallization tank is performed in order to improve productivity of a product. However, the thickening operation lengthens a retention time, which causes a problem of a change of the particle size distribution due to enlargement of the particles. Therefore, Patent Document 1 discloses that an operation is performed to satisfy a relationship in which a supply speed of a raw material liquid and a slurry concentration set under reference conditions for continuously overflowing a reaction solution, and a supply speed of a raw material liquid and a slurry concentration set under performance conditions for thickening a slurry by an operation of thickening the reaction solution extracted from a reaction vessel and returning the reaction solution to the reaction vessel are in a predetermined range. However, it is necessary to set the supply speed of the raw material liquid and the slurry concentration in the performance conditions for thickening the slurry while considering a relationship with the reference conditions under which the slurry is not thickened, which complicates management of driving. In addition, in a process of proceeding with the thickening of the slurry, it is necessary to change the supply speed of the raw material liquid, which complicates the management of the operation.

Patent Document 2 discloses that, in a case where a thickening device is connected to a reactor and a reaction slurry generated by the reactor is circulated between the reactor and the thickening device, a circulation flow rate is set to an extent that a stirring state of the reactor is not changed. However, when the circulation flow rate of the slurry is suppressed in an operation of performing the thickening, a sufficient thickening time cannot be obtained, and as a result, it is difficult to increase a concentration to be reached. This may affect a reachable thickening concentration in a situation in which a separation medium such as a filter cloth or a membrane, and a thickening area such as a settling area are fixed in the thickening operation. In addition, in the operation of performing the thickening, it is difficult to suppress the circulation flow rate of the slurry in a situation in which the thickening area is fixed. Depending on a target substance, it is necessary to perform the operation with a higher circulation flow rate, and it is difficult to avoid affecting the stirring state.

Patent Document 3 proposes that a crystal that is already crystallized can be grown as a seed crystal while suppressing crystallization of a new crystal by a thickening operation, and a raw material compound is continuously supplied and circulated to grow the seed crystal to have a desired particle diameter. In addition, in a case where an operation using a separation membrane is performed in the thickening operation, when a problem such as clogging occurs, it is difficult to perform continuous driving. Therefore, a system for stabilizing the thickening operation by providing a classification step in a previous stage of the thickening operation and removing particles having a large diameter that cause clogging of a membrane in advance has been proposed. However, in fact, it is difficult to classify several micron orders, and as a result, a product having a target particle diameter of 10 microns or more is obtained. In addition, it is difficult to stabilize the classification operation itself, and the driving management becomes complicated.

### [Citation List]

### [Patent Documents]

[Patent Document 1]
   Japanese Patent No. 6493082
[Patent Document 2]
   Japanese Patent No. 5206948
[Patent Document 3]
   Japanese Unexamined Patent Application, First Publication No. 2020-99841

### [Summary of Invention]

### [Technical Problem]

The present invention has been made under such a background, and an object thereof is to provide a crystallization method and a crystallization apparatus capable of suppressing a range of a particle size distribution and performing stable driving of a device, even when a thickening operation is performed during reaction crystallization.

### [Solution to Problem]

In order to achieve such an object by solving the problems described above, the present invention proposes the following aspects.

In a first aspect of the present invention, there is provided a crystallization method including forming a circulation path between a main reaction unit and a thickening reaction tank, and performing reaction crystallization, in which the circulation path includes an inflow path from the main reaction unit to the thickening reaction tank, and an outflow path from the thickening reaction tank to the main reaction unit, a stirring zone to which the inflow path and the outflow path are connected is provided in a lower portion of the thickening reaction tank, a clarification zone in which a supernatant is generated is provided in an upper portion of the thickening reaction tank, and a thickening zone in which particles are settled is provided between the stirring zone and the clarification zone.

According to the first aspect, an internal state of the main reaction unit is mainly determined by a flow rate of the circulation path between the main reaction unit and the thickening reaction tank. In addition, the thickening reaction tank has the thickening zone and the clarification zone above the stirring zone. Accordingly, a thickening operation does not easily affect a reaction, and the effect on particles that become a product can also be reduced. Therefore, adjustment of the thickening operation and the like are easily performed. In addition, as a particle concentration in the thickening reaction tank is increased by the thickening, it is possible to reduce a storage amount of a product slurry, and it is possible to reduce the load of a solid-liquid separation operation such as filtration and drying performed at a subsequent stage.

According to a second aspect of the present invention, in the first aspect, a ratio LID of a height L from a lower end of the thickening reaction tank to an overflow level to a diameter D of the thickening reaction tank is in a range of 2 to 20.

According to the second aspect, since a shape of the thickening reaction tank has an appropriate aspect ratio, it is easy to optimize the mutual effect of the stirring zone, the thickening zone, and the clarification zone.

According to a third aspect of the present invention, in the first or second aspect, a liquid level in the thickening reaction tank gradually rises while performing the reaction crystallization, and the thickening zone and the clarification zone are formed in a middle of a step of the reaction crystallization.

According to the third aspect, the particles included in a reaction solution supplied from the main reaction unit can be mainly retained in the stirring zone. As the reaction solution is accumulated in the thickening reaction tank, a supernatant can reach the clarification zone while thickening the reaction solution. The reaction solution can be efficiently thickened by settling the particles and rising the supernatant.

According to a fourth aspect of the present invention, in the third aspect, a ratio Vt/Vs of a volume Vt in the thickening reaction tank increased after start of the reaction crystallization to a volume Vs in the thickening reaction tank at the start of the reaction crystallization is greater than 1.

According to the fourth aspect, the supernatant can rise to the thickening zone and the clarification zone according to the volume Vt increased during the operation of the reaction crystallization, and the particles retained in the stirring zone can be thickened.

According to a fifth aspect of the present invention, in any one aspect of the first to fourth aspects, a ratio H/L of a height H from a lower end of the thickening reaction tank to the inflow path to a height L from the lower end of the thickening reaction tank to an overflow level is less than 20% in terms of a percentage.

According to the fifth aspect, since a range of the stirring zone is relatively lower than the height of the thickening reaction tank, it is possible to more effectively thicken the particles retained in the stirring zone.

In a sixth aspect of the present invention, there is provided a crystallization apparatus which forms a circulation path between a main reaction unit and a thickening reaction tank, and performs reaction crystallization, in which the circulation path includes an inflow path from the main reaction unit to the thickening reaction tank, and an outflow path from the thickening reaction tank to the main reaction unit, a stirring zone to which the inflow path and the outflow path are connected is provided in a lower portion of the thickening reaction tank, a clarification zone in which a supernatant is generated is provided in an upper portion of the thickening reaction tank, and a thickening zone in which particles are settled is provided between the stirring zone and the clarification zone.

According to the sixth aspect, an internal state of the main reaction unit is mainly determined by a flow rate of the circulation path between the main reaction unit and the thickening reaction tank. In addition, the thickening reaction tank has the thickening zone and the clarification zone above the stirring zone. Accordingly, a thickening operation does not easily affect a reaction, and the effect on particles that become a product can also be reduced. Therefore, adjustment of the thickening operation and the like are easily performed.

According to a seventh aspect of the present invention, in the sixth aspect, a ratio LID of a height L from a lower end of the thickening reaction tank to an overflow level to a diameter D of the thickening reaction tank is in a range of 2 to 20.

According to the seventh aspect, since a shape of the thickening reaction tank has an appropriate aspect ratio, it is easy to optimize the mutual effect of the stirring zone, the thickening zone, and the clarification zone.

According to an eighth aspect of the present invention, in the sixth or seventh aspect, a ratio H/L of a height H from a lower end of the thickening reaction tank to the inflow path to a height L from the lower end of the thickening reaction tank to an overflow level is less than 20% in terms of a percentage.

According to the eighth aspect, since a range of the stirring zone is relatively lower than the height of the thickening reaction tank, it is possible to more effectively thicken the particles retained in the stirring zone.

### [Advantageous Effects of Invention]

According to the aspects of the present invention, it is possible to provide a crystallization method and a crystallization apparatus capable of suppressing a range of a particle size distribution and performing stable driving of a device, even when a thickening operation is performed during reaction crystallization.

### [Brief Description of Drawings]

FIG. 1 is a schematic view showing an example of a crystallization apparatus of an embodiment.
FIG. 2 is a schematic view showing an operation of a thickening reaction tank.
FIG. 3 is a schematic view showing an example of a crystallization apparatus provided with a thickening operation unit.
FIG. 4 is a schematic view showing a crystallization apparatus of Comparative Example 1.
FIG. 5 is a graph showing a transition of an SS concentration of Example 1.
FIG. 6 is a graph showing a particle size distribution of a product of Example 1.
FIG. 7 is a graph showing a particle size distribution of a supernatant of Example 1.
FIG. 8 is a graph showing a transition of an SS concentration in a product.
FIG. 9 is a graph showing a transition of D50 of a product.
FIG. 10 is a graph showing a transition of (D90 - D10)/D50 of a product.
FIG. 11 is a graph showing a transition of an SS concentration in a supernatant.
FIG. 12 is a graph showing a transition of (D90 - D10)/D50 of a supernatant.
FIG. 13 is a drawing-substituting image showing SEM data of a product of Comparative Example 1.
FIG. 14 is a drawing-substituting image showing SEM data of a product in Example 2.
FIG. 15 is a drawing-substituting image showing SEM data of a particle group in a supernatant of Example 2.
FIG. 16 is a schematic view showing a crystallization apparatus of Reference Example 1.
FIG. 17 is a schematic view showing a crystallization apparatus of Reference Example 2.

### [Description of Embodiments]

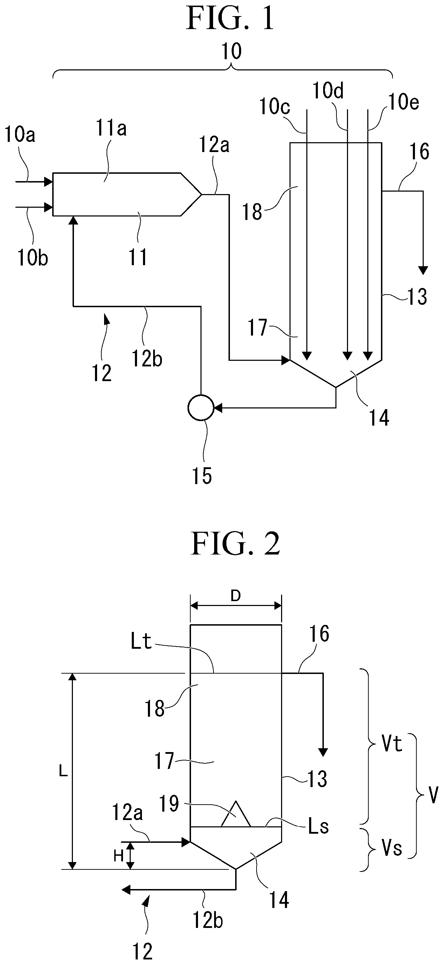

Hereinafter, the present invention will be described with reference to the drawings, based on preferred embodiments. As shown in FIG. 1, a crystallization apparatus 10 of the embodiment forms a circulation path 12 between a main reaction unit 11 and a thickening reaction tank 13, and performs reaction crystallization.

A reaction treatment in the main reaction unit 11 is performed, for example, by supplying one or more kinds of raw material liquids 10a and 10b into the main reaction unit 11. In the main reaction unit 11, the reaction treatment may be performed by bringing the raw material liquids 10a and 10b into contact with a reaction solution 11a circulating through the circulation path 12. The raw material liquids 10a and 10b are liquids containing substances to be added to a reaction field. The raw material liquids 10a and 10b may be solutions or dispersion liquids. Some of the substances to be added to the reaction field may be supplied to the thickening reaction tank 13 as one or more kinds of a raw material liquid 10c or substances 10d and 10e other than the raw material. A part of the raw material liquids 10a and 10b may be supplied to the thickening reaction tank 13.

A start base liquid used in the crystallization apparatus 10 at the start of the reaction may be a solution not including the raw material liquids 10a and 10b. The start base liquid may contain a component of the raw material liquid 10c. The reaction solution 11a may be used as a start base liquid. As the reaction crystallization proceeds, the reaction solution 11a becomes in the form of a slurry containing suspended solids. Although not shown, a gas may be supplied to the main reaction unit 11 or the thickening reaction tank 13 together with the raw material liquids 10a, 10b, and 10c. The gas may be an inert gas such as a nitrogen gas or a carbon dioxide gas, or may be a reactive gas such as air, oxygen, ozone, ammonia, chlorine, or hydrogen, which performs a chemical reaction in the reaction treatment.

Although not particularly shown, the crystallization apparatus 10 may include equipment for preparing the raw material liquids 10a, 10b, and 10c. As such equipment, a vessel for producing the raw material liquids 10a, 10b, and 10c by dissolving raw materials in a solvent such as water, a vessel for retaining the raw material liquids 10a, 10b, and 10c, and a path and a pump for supplying the raw material liquids 10a, 10b, and 10c are exemplary examples.

The reaction solution 11a obtained by mixing the raw material liquids 10a, 10b, and 10c is circulated between the main reaction unit 11 and the thickening reaction tank 13 via the circulation path 12 by power of a circulation pump 15. The circulation path 12 includes an inflow path 12a from the main reaction unit 11 to the thickening reaction tank 13 and an outflow path 12b from the thickening reaction tank 13 to the main reaction unit 11.

The main reaction unit 11 provides a reaction field by a contact between the raw material liquids 10a and 10b or a contact between the raw material liquids 10a and 10b and the reaction solution 11a. In order to accelerate a uniform reaction, the main reaction unit 11 may be provided with a device or structure for forming a flow such as a rotational flow or a stirring flow, although not shown. It is possible to obtain a shearing force to control particle growth by a circulation flow, a rotational energy, or the like. The main reaction unit 11 shown in the drawing is horizontally oriented, but may be vertically oriented.

Although not particularly shown, two or more main reaction units 11 may be arranged in series or in parallel. In a case where the main reaction units 11 are arranged in series, the reaction solution 11a sequentially passes through two or more main reaction units 11, during a process of sending the reaction solution 11a from the thickening reaction tank 13 to the circulation path 12, and returning the reaction solution 11a to the thickening reaction tank 13 again. In a case where the main reaction units 11 are arranged in parallel, the inflow path 12a and the outflow path 12b are branched into two or more paths, and the reaction solution 11a passes through the main reaction units 11 through the branched paths, during the process of sending the reaction solution 11a from the thickening reaction tank 13 to the circulation path 12, and returning the reaction solution 11a to the thickening reaction tank 13 again.

In the thickening reaction tank 13, by ensuring a retention time of the reaction solution 11a, the stabilization of the reaction solution 11a, the growth, and settling and thickening of the particles, and the like are achieved. For example, in a case where a volume of the thickening reaction tank 13 is greater than an internal volume of the main reaction unit 11 and the circulation path 12, a time during which the reaction solution 11a is retained in the thickening reaction tank 13 can be lengthened.

The thickening reaction tank 13 is formed in a cylindrical shape, a square cylindrical shape, or the like. The inflow path 12a and the outflow path 12b of the circulation path 12 are connected to a lower portion of the thickening reaction tank 13 to form a stirring zone 14. The stirring zone 14 may accelerate the stirring of the reaction solution 11a by a flow of the reaction solution 11a from the inflow path 12a toward the outflow path 12b. The inflow path 12a may be branched into a plurality of paths and the reaction solution 11a may flow into the thickening reaction tank 13 from the paths. Outlets may be installed at a plurality of locations of the stirring zone 14 according to a size of the thickening reaction tank 13 and the like and the outlets may merge with the outflow path 12b.

In order to suppress turbulence in the thickening reaction tank 13 due to an inflow energy of the reaction solution 11a that flows into the thickening reaction tank 13 from the main reaction unit 11, it is preferable to provide a structure of adjusting the flow in the outlet of the main reaction unit 11, the inside of the inflow path 12a, an inlet of the thickening reaction tank 13, and the like. For example, a diffuser may be installed to weaken a liquid flow, and a structure capable of adjusting an outflow direction from the main reaction unit 11 or an inflow direction to the thickening reaction tank 13 may be provided.

Although not particularly shown, a stirring device for stirring the reaction solution 11a, a structure for controlling the flow of the reaction solution 11a, or the like may be disposed inside the thickening reaction tank 13. Accordingly, the mixing of the reaction solution 11a or the mixing of the reaction solution 11a and the raw material liquid 10c can be accelerated. For example, a rotation shaft may be installed upward from the lower portion of the thickening reaction tank 13, and a stirring blade and the like (not shown) may be disposed on the rotation shaft.

By adjusting a position, a direction, and the like where the inflow path 12a and the outflow path 12b are connected to the thickening reaction tank 13, it is possible to suppress the deposition of particles even without providing a stirring device.

The connection position of the outflow path 12b to the thickening reaction tank 13 is preferably at a lower end of the thickening reaction tank 13. In this case, the sending of the particles can be accelerated. A lower end portion of the thickening reaction tank 13 preferably has a funnel shape. The flow rate at an outlet of the thickening reaction tank 13 may be, for example, in a range of 0.3 to 10 m/s.

The thickening reaction tank 13 includes an overflow discharge passage 16 for discharging overflow. The overflow discharge passage 16 may be always open to the thickening reaction tank 13. The overflow discharge passage 16 may be closed except when it is necessary, such as sampling or the like. A plurality of catch basins may be installed in a circumferential direction of the thickening reaction tank 13. The entire circumference of the thickening reaction tank 13 in the circumferential direction may be open in a ring shape to allow the thickening reaction tank 13 and the overflow discharge passage 16 to communicate with each other. The overflow discharge passage 16 may be arranged on an upper end of the thickening reaction tank 13.

A clarification zone 18 in which a supernatant is generated is formed in the upper portion of the thickening reaction tank 13. A thickening zone 17 in which particles are settled is formed between the stirring zone 14 and the clarification zone 18. As shown in FIG. 2, an overflow level Lt may be set according to a position where the overflow discharge passage 16 is provided. A cross-sectional shape of the thickening zone 17 and the clarification zone 18 may be a cylindrical shape continuous with the same shape vertically. An inner surface of the thickening reaction tank 13 in the thickening zone 17 and the clarification zone 18 may have a tapered, may be flat, or may be formed with irregularities or the like.

In order to improve settling performance, for example, a settling device such as an inclined tube or an inclined plate may be provided in the thickening zone 17 or the clarification zone 18. In a case where the slurry contains a gas, there is a possibility that the particles rise due to growth of air bubbles. In order to suppress the growth of the air bubbles, a structure in which the settling device is installed on the upper portion of the thickening zone 17 or in the clarification zone 18, and the settling device is not provided on the lower portion of the thickening zone 17 may be provided. The position where the air bubbles are generated may be controlled by irradiating a predetermined zone with ultrasonic waves.

In the crystallization apparatus 10 of the embodiment, the inside of the thickening reaction tank 13 is divided into a plurality of zones such as the stirring zone 14, the thickening zone 17, and the clarification zone 18 in a vertical direction. The reaction solution 11a circulating between the main reaction unit 11 and the thickening reaction tank 13 is mainly distributed in the stirring zone 14. An internal state of the main reaction unit 11 is mainly determined by a flow rate of the circulation path 12 between the main reaction unit 11 and the thickening reaction tank 13.

Since the thickening reaction tank 13 includes the thickening zone 17 and the clarification zone 18 above the stirring zone 14, the thickening operation does not easily affect the reaction, and the effect on the particles that become a product can also be reduced. Therefore, adjustment of the thickening operation is easily performed. In addition, as a particle concentration in the thickening reaction tank 13 is increased by the thickening, it is possible to reduce a storage amount of a product slurry, and it is possible to reduce the load of a solid-liquid separation operation such as filtration and drying performed at a subsequent stage.

Since no partition wall, diaphragm, or the like for separating only a dispersion medium of the slurry to the clarification zone 18 is provided between the stirring zone 14 and the clarification zone 18, some of particles may rise from the stirring zone 14 to the thickening zone 17. However, since the flow is suppressed in the thickening zone 17 so that the particles are settled, it is possible to suppress the amount of particles rising to the clarification zone 18. Compared to the thickening operation using the membrane separation, it is possible to avoid a decrease of stability of driving and an increase of driving cost due to fouling of a membrane.

A ratio LID of a height L from the lower end of the thickening reaction tank 13 to the overflow level Lt to a diameter D of the thickening reaction tank 13 is preferably in a range of 1 to 20, more preferably in a range of 2 to 20, even more preferably in a range of 2 to 10, and still preferably in a range of 3 to 8. As a shape of the thickening reaction tank 13 has an appropriate aspect ratio, it is easy to optimize the mutual effect of the stirring zone 14, the thickening zone 17, and the clarification zone 18.

In a case where the thickening reaction tank 13 is not cylindrical, an equivalent diameter may be set as the diameter D. When a cross-sectional area is defined as A and a circumference of a cross section is defined as B, the equivalent diameter is obtained by 4A/B. The equivalent diameter of a circle is equal to a diameter, and the equivalent diameter of a square is equal to a length of one side. The cross-sectional shape of the thickening reaction tank 13 in a horizontal plane is not particularly limited, and in a case where the cross-sectional shape is a polygon, rounded corners may be provided. The cross-sectional shapes in each zone of the stirring zone 14, the thickening zone 17, and the clarification zone 18 may be the same or similar, and the cross-sectional shapes may be made different in different zones.

When the reaction crystallization starts, a liquid level Ls at the start may be set to a position lower than the overflow level Lt. When the reaction solution 11a is supplied from the main reaction unit 11, the liquid level in the thickening reaction tank 13 gradually rises. Accordingly, the thickening zone 17 and the clarification zone 18 are formed in the middle of a step of the reaction crystallization. The height difference between the liquid level Ls at the start and the overflow level Lt is not particularly limited, but is, for example, about 1 m to 10 m and preferably less than 7 m.

The particles included in the reaction solution 11a supplied from the main reaction unit 11 can be mainly retained in the stirring zone 14. As the supplied reaction solution 11a is accumulated, a supernatant can be separated from the particles and reach the clarification zone 18 while thickening the reaction solution 11a. The reaction solution 11a can be efficiently thickened by the settling of the particles and rising of the supernatant.

A rate of rise until the liquid level reaches the overflow level Lt may be constant or may slightly fluctuate. In a case where there is no rapid rise of the liquid level, it is possible to ensure a time for the particles to be settled even while the liquid level rises, and it is possible to suppress the rise of the particles. It is preferable that the rate of rise of the liquid level is not excessively high, compared to a rate of settling of the particles. The smaller the particle diameter, the slower the rate of settling. Therefore, an inflow amount of the reaction solution 11a may be set so that particles having a large diameter with respect to a desired particle diameter are settled and small particles with respect to the desired particle diameter rise.

The liquid level Ls at the start may be at a position higher than a position where the inflow path 12a is connected to the thickening reaction tank 13. Although it depends on the size of the thickening reaction tank 13, the liquid level Ls at the start may be set to have, for example, a height of 1 m lower than the inflow path 12a, and more preferably, 0.5 m lower than the inflow path 12a.

A ratio H/L of a height H from the lower end of the thickening reaction tank 13 to the inflow path 12a to the height L from the lower end of the thickening reaction tank 13 to the overflow level Lt is, in terms of a percentage, preferably less than 50%, more preferably less than 30%, and even more preferably less than 20%. When a range of the stirring zone 14 is relatively lower than the height of the thickening reaction tank 13, it is possible to more effectively thicken the particles retained in the stirring zone 14.

A ratio Vt/Vs of a volume Vt in the thickening reaction tank 13 increased after the start to a volume Vs in the thickening reaction tank 13 at the start is preferably more than 0.5, more preferably more than 0.8, and even more preferably more than 1. The volume Vs at the start is a volume contained from the lower end of the thickening reaction tank 13 to the liquid level Ls at the start. The volume Vt increased after the start is a volume contained from the liquid level Ls at the start to the overflow level Lt. The supernatant can rise to the thickening zone 17 and the clarification zone 18 according to the increased volume Vt, and the particles retained in the stirring zone 14 can be thickened.

In order to suppress the rise of the particles due to the influence of the reaction solution 11a flowing into the thickening reaction tank 13 from the inflow path 12a, an obstacle 19 such as a cone or a baffle may be installed inside the thickening reaction tank 13. It is preferable to install the obstacle 19 in a boundary between the stirring zone 14 and the thickening zone 17. A position of the obstacle 19 is preferably above the liquid level Ls at the start or the connection position of the inflow path 12a to the thickening reaction tank 13. The obstacle 19 may be installed below the liquid level Ls at the start or the connection position of the inflow path 12a. For example, when the flow rate at the time of inflow is less than 1 m/s, the obstacle 19 may be omitted.

A volume V of the entire thickening reaction tank 13, which is the sum of the volume Vs at the start and the volume Vt increased after the start, is preferably set in an appropriate range according to a supply amount of raw materials. When the supply amount of raw materials of the entire crystallization apparatus 10 supplied from the outside per hour is defined as q, V/q is preferably in a range of 1 to 24 hours, and more preferably in a range of 1 to 5 hours.

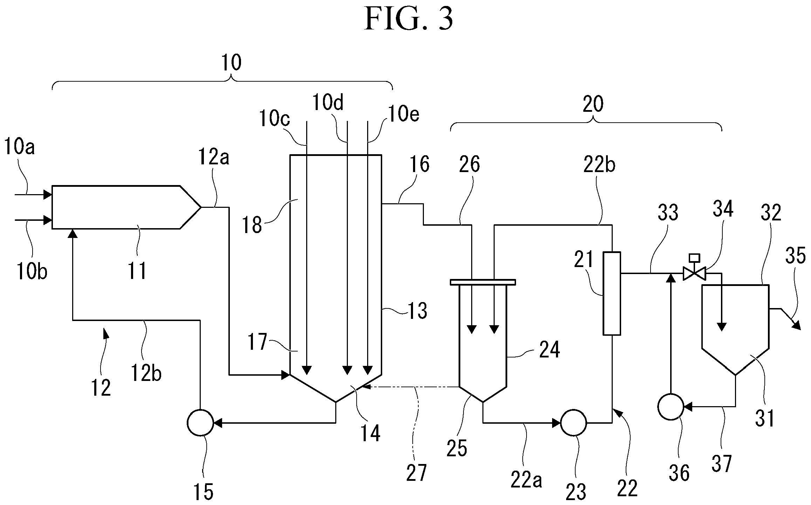

The supernatant discharged from the overflow discharge passage 16 may be thickened and collected. For example, as shown in FIG. 3, a thickening operation unit 20 for thickening a supernatant 26 may be installed. The thickening operation unit 20 includes a thickening tank 24 connected to the overflow discharge passage 16.

A part of the supernatant 26 retained in the thickening tank 24 circulates between the thickening tank 24 and a solid-liquid separation device 21 via a second circulation path 22 with power of a second circulation pump 23. The second circulation path 22 includes a sending path 22a from the thickening tank 24 to the solid-liquid separation device 21, and a returning path 22b from the solid-liquid separation device 21 to the thickening tank 24.

A method of solid-liquid separation in the solid-liquid separation device 21 is not particularly limited, and a filter material such as filter cloth, a solid-liquid separation membrane, centrifugation, settling separation, liquid cyclone, and the like are exemplary examples. It is preferable to appropriately select the solid-liquid separation device 21 according to a viscosity of the supernatant 26, a concentration or a particle diameter of the suspended solids included in the supernatant 26, or the like. A particle size distribution can be measured by, for example, a laser light diffraction scattering method or the like.

A separation liquid 31 such as a filtrate or a membrane filtrate is separated from the supernatant 26 by the solid-liquid separation operation.

The separation liquid 31 may be a liquid that contains no suspended solids, or may be a liquid in which a concentration of the suspended solids is lower than that in the supernatant 26.

Particularly, in a case where the solid-liquid separation device 21 has a solid-liquid separation membrane, the solid-liquid separation is easily performed even when the suspended solids included in the supernatant 26 in the form of slurry are small. In addition, the use of the solid-liquid separation membrane enables the decrease of the amount of suspended solids included in the separation liquid 31. Accordingly, the thickening and the collection of the suspended solids can be more efficient, and the solid-liquid separation can be more stable.

A shape of the solid-liquid separation membrane is not particularly limited, and a fiber-like hollow fiber membrane, a planar flat membrane, a tubular membrane, and the like are exemplary examples. The hollow fiber membrane may be used by bundling a large number of hollow fibers in the form of a sheet or the like. As a separation method of the solid-liquid separation membrane, reverse osmosis (RO), ultrafiltration (UF), precision filtration (MF), and the like are exemplary examples. The solid-liquid separation membrane in the solid-liquid separation device 21 may be in a fixed state, or in a state where a movement such as rotation or the like is possible. In addition, the solid-liquid separation membrane may be provided with a rotary blade with respect to a fixed membrane, and has a function of flowing a solid material layer on a membrane surface.

A case where the solid-liquid separation membrane is formed of a hollow fiber membrane is preferable since the solid-liquid separation membrane having a large area can be compactly accommodated and an installation area can be easily reduced. In addition, in a case where the concentration of the suspended solids in the supernatant 26 is low, for example, when the concentration is about 0.1% to 50% by weight, a solid-liquid separation membrane, particularly a solid-liquid separation membrane having a hollow fiber membrane is preferably used.

The separation liquid 31 separated from the solid-liquid separation device 21 can be retained in a separation liquid container 32. The solid-liquid separation device 21 and the separation liquid container 32 are connected by a separation liquid path 33. The separation liquid path 33 can be opened and closed by a valve 34. The separation liquid 31 no longer needed in the separation liquid container 32 can be discharged from a separation liquid discharge path 35.

When an amount of the suspended solids adhering to the inside of the solid-liquid separation device 21 increases, performance of the solid-liquid separation may be reduced. Particularly, in a case where the solid-liquid separation device 21 has a filter material, a solid-liquid separation membrane, or the like, the suspended solids may adhere to the filter material, the solid-liquid separation membrane, or the like. It is preferable to wash the solid-liquid separation device 21 in order to maintain or recover the performance of solid-liquid separation.

A washing operation of the solid-liquid separation device 21 may be a back washing operation. In the back washing operation, a liquid is supplied in a direction opposite to the solid-liquid separation operation. It is preferable to perform the back washing operation by supplying a liquid from an outlet side surface with respect to the filter material, the solid-liquid separation membrane, or the like. In the washing operation, even in a case where the liquid is supplied to an inlet side surface, the suspended solids attached to the filter material or the like are separated and returned into the form of slurry having fluidity. Accordingly, the washing operation of the filter material or the like can be performed.

The liquid for washing used in the washing operation may be a liquid in which a concentration of the suspended solids is lower than that of the supernatant 26, or may be a liquid that contains no suspended solids. The separation liquid 31 may be used as the liquid for washing. In this case, even in a case where the separation liquid 31 is mixed into the supernatant 26, the influence on the operation can be suppressed. The separation liquid 31 in the separation liquid container 32 can be supplied to the solid-liquid separation device 21 via a separation liquid return path 37 by power of a return pump 36. During the washing operation using the separation liquid 31, the valve 34 of the separation liquid path 33 is closed.

The suspended solids in the separation liquid 31 may be settled while the separation liquid 31 is retained in the separation liquid container 32. The liquid, in which the concentration of the suspended solids is decreased, may be discharged from the separation liquid discharge path 35, and a liquid, in which the concentration of the suspended solids is increased by the settling, may be used for washing. In contrast, the liquid, in which the concentration of the suspended solids is increased by the settling, may be discharged from the separation liquid discharge path 35, and the liquid, in which the concentration of the suspended solids is decreased, may be used for washing.

It is preferable that the washing operation of the solid-liquid separation device 21 is suitably performed, when the amount of the separation liquid 31 decreases, or a differential pressure between an inlet side and an outlet side of the solid-liquid separation device 21 increases. Accordingly, a function of the solid-liquid separation device 21 can be restored, and the thickening operation can be effectively continued. By temporarily performing the washing operation with respect to the thickening operation which is continuously performed, it is possible to suppress a fluctuation of the concentration of the slurry due to the washing operation.

When the separation liquid 31 is removed from the supernatant 26, a thickened slurry 25 can be obtained. Although not particularly shown, the thickened slurry 25 which is thickened by the thickening operation unit 20 may be supplied to the crystallization apparatus 10. For example, a path 27 for returning a part of the thickened slurry 25 to the lower portion of the thickening reaction tank 13 or to the outflow path 12b may be installed.

For example, as added with a two-dot chain line in FIG. 3, in a case where the path 27 for returning the thickened slurry 25 is installed, a long-term continuous driving manipulation can be performed without discharging a particle waste liquid, as a batch continuous operation method. In a case where the path 27 for returning the thickened slurry 25 is omitted, the slurry thickened by the thickening operation unit 20 while the particle growth does not sufficiently proceed becomes a waste liquid. When the path 27 for returning the thickened slurry 25 is installed, overflow discharged from the overflow discharge passage 16 and having a low concentration of the suspended solids (SS) is thickened by the thickening operation unit 20. Then, it is possible to grow the particles, and it is also possible to collect as a slurry having a high concentration. Therefore, it is possible to reduce the load of a filtration device in the solid-liquid separation device 21 at the subsequent stage, and collect the clearer separation liquid 31.

As a membrane thickening device used in the solid-liquid separation device 21, a rotary flat membrane, a device with a rotating blade with respect to a fixed flat membrane, a hollow fiber membrane, and the like are exemplary examples. In addition to the membrane, it is also possible to directly collect the SS by thickening using filter cloth, centrifugation separation, settling separation, or using a dewater device such as a belt press or a filter press.

Hereinabove, the present invention has been described based on preferred embodiments, but the present invention is not limited to the embodiments described above, and various modifications can be made within the scope of the present invention defined in claims.

The particles produced by the reaction crystallization are not particularly limited and may be an inorganic substance or an organic substance.

For example, the reaction crystallization can be applied to a production of a variety of applications, including a positive electrode active material for a lithium-ion battery. A dispersion medium of the slurry may be water or may be an organic solvent.

### [Examples]

Next, in order to clarify the effects of the present invention, examples and comparative examples will be described. The present invention is not limited to the examples below.

### (Example 1)

The crystallization apparatus 10 having the configuration schematically shown in FIG. 1 was produced. A device volume was 4 L at the start and was 15 L at the time of overflow discharge. The total supply amount of all raw materials was adjusted to be 67 mL/min so that a retention time was 60 minutes at the device volume at the start. Raw material liquids are as follows.

As a metal supply source, nickel sulfate, cobalt sulfate, and manganese sulfate were used, and an ion exchange solution (pure water) was used so that a concentration of each thereof was adjusted to 1.5 mol/L. Regarding a mole ratio of the metal supplied to the device, the supply amount of the raw material was distributed according to a mole ratio required for a product. Caustic soda having a concentration of 20 wt% and an ammonia source having a concentration of about 10 wt% were supplied to the metal supply source to have predetermined pH and temperature. An operation pH was set to 11.0 and an operation temperature was set to 50°C.

A reaction solution (slurry) obtained by mixing the raw material liquids was circulated at 11 L/min, and the reaction solution 11a was mixed with the raw material liquids 10a, 10b, and 10c in the main reaction unit 11 and the thickening reaction tank 13, caused to perform a reaction, and circulated in a system. The reaction solution was stirred by this circulation flow in the stirring zone 14 of the thickening reaction tank 13. Here, in order to produce divalent metal hydroxide from the metal supply source and alkali, a nitrogen gas was supplied to the main reaction unit 11 via the lower portion of the thickening reaction tank 13 at less than 5 mL/min.

The thickening reaction tank 13 was cylindrical with a diameter D of 200 mm except for a funnel-shaped lower portion, and was provided with the overflow discharge passage 16 at a height L of 1000 mm from the lower portion. The overflow was reached at a time point when 3θ has elapsed as an elapsed time coefficient from the start of the operation. Thereafter, the operation was continued until 11θ (660 min) has elapsed as the elapsed time coefficient, and a supernatant was discharged at 67 mL/min, which is the same amount as the raw material supply amount. The elapsed time coefficient is a numerical value obtained by dividing an actual elapsed time by the retention time.

During the driving, the discharge from the lower portion of the thickening reaction tank 13 was performed every 60 minutes with a small amount of about 100 mL only during sampling. A slurry of the product was collected from the lower portion of the thickening reaction tank 13. A slurry of the supernatant was collected from the overflow discharge passage 16. An analysis result of the slurry will be described later.

### (Example 2)

The operation was performed in the same manner as in Example 1, except that the thickening operation unit 20 was attached to the crystallization apparatus 10 as shown in FIG. 3, and the supply amount of the nitrogen gas was set to 10 mL/min. The operation was continued until 28θ (1680 min) has elapsed as the elapsed time coefficient. In the same manner as in Example 1, the slurry of the product was collected from the lower portion of the thickening reaction tank 13 only during sampling. The entire amount of the slurry of the supernatant discharged due to overflow after an elapse of 3θ was collected through a membrane thickening unit of the thickening operation unit 20. An analysis result of the slurry will be described later.

### (Example 3)

A dimension and the like of the device used in Example 2 were slightly changed. Specifically, the total supply amount of all raw materials was adjusted to be 25 mL/min so that the device volume was set to 1 L at the start and 6.2 L at the time of overflow discharge, and the retention time was 40 minutes at the device volume at the start. The thickening reaction tank 13 was cylindrical with a diameter D of 80 mm except for a funnel-shaped lower portion, and was provided with the overflow discharge passage 16 at a height L of 1000 mm from the lower portion. Other than the above, the operation was performed in the same manner as in Example 2.

In Example 3, the operation was continued until 20θ (1200 min) has elapsed as the elapsed time coefficient. In the same manner as in Example 1, the slurry of the product was collected from the lower portion of the thickening reaction tank 13 only during sampling. The entire amount of the slurry of the supernatant discharged due to overflow after an elapse of 3θ was collected through the membrane thickening unit of the thickening operation unit 20. An analysis result of the slurry will be described later.

### (Comparative Example 1)

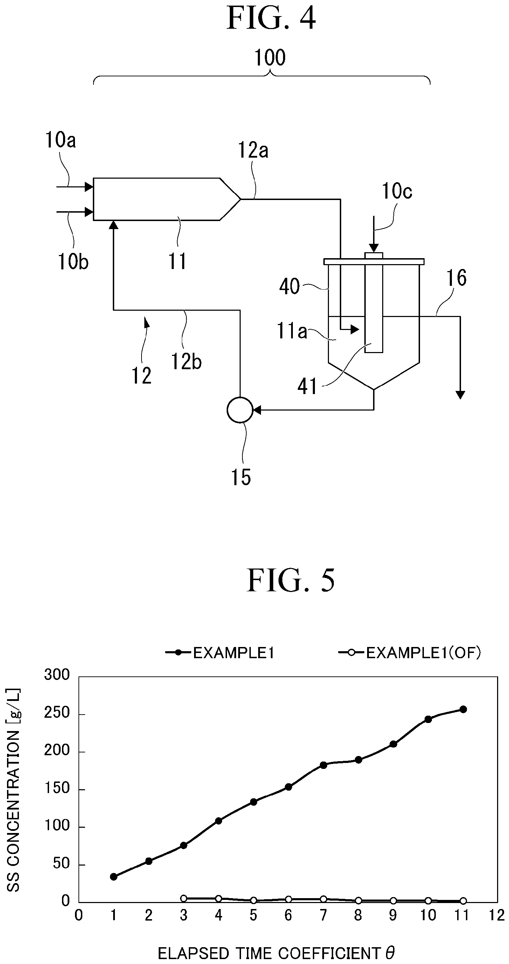

A crystallization apparatus 100 having a configuration schematically shown in FIG. 4 was produced. The reaction solution 11a was supplied to a retention tank 40 from the main reaction unit 11 via the inflow path 12a and returned to the main reaction unit 11 from the outflow path 12b using the circulation pump 15.

The total supply amount of all raw materials was adjusted to be 25 mL/min so that the device volume was 1 L and the retention time was 40 minutes. As the raw material liquids 10a, 10b, and 10c, and the like, the same raw material liquids as in Example 1 were used, and the operation pH and the operation temperature were set to be the same as in Example 1. A supply path 41 for the raw material liquid 10c or the like was installed along a central axis of the retention tank 40.

A slurry of the reaction solution 11a obtained by mixing the raw material liquids was circulated at 8 L/min, and the reaction solution 11a was mixed with the raw material liquids 10a, 10b, and 10c in the main reaction unit 11 and the retention tank 40, caused to perform a reaction, and circulated in a system. The reaction solution inside of the retention tank 40 was stirred by this circulation flow. Here, in order to produce divalent metal hydroxide from the metal supply source and alkali, a nitrogen gas was supplied to the lower portion of the retention tank 40 at 20 mL/min.

A slurry of 25 mL/min, which is the same amount as the raw material supply amount, was discharged from the overflow discharge passage 16 provided on an outer peripheral portion of the retention tank 40. The slurry discharged as an overflow was used for sampling. An analysis result of the slurry will be described later.

### (Analysis Result of Slurry)

Results of analyzing the slurry obtained using the devices of Examples 1 to 3 and Comparative Example 1 will be described. FIG. 5 is a graph showing a transition of an SS concentration of the slurry collected in Example 1. In the graph, an SS concentration of the product collected from the lower portion of the thickening reaction tank 13 is shown as "Example 1", and an SS concentration of the supernatant collected as the overflow is shown as "Example 1 (OF)". The particle size distribution was measured by a laser light diffraction scattering method.

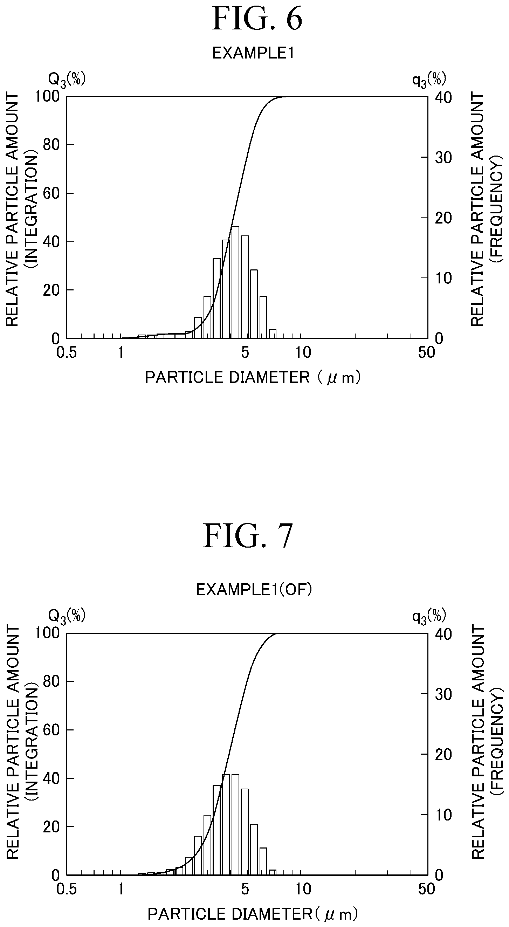

The particle size distribution of the product obtained when 11θ has elapsed in Example 1 is shown in FIG. 6. From this particle size distribution, it is found that a median diameter is 4.213 µm, an average diameter is 4.109 µm, a mode diameter is 4.562 µm, a standard deviation is 0.124 µm, a 10% diameter is 2.913 µm, a 20% diameter is 3.345 µm, a 30% diameter is 3.622 µm, a 40% diameter is 3.922 µm, a 50% diameter is 4.213 µm, a 60% diameter is 4.501 µm, a 70% diameter is 4.089 µm, a 80% diameter is 5.138 µm, and a 90% diameter is 5.843 µm.

The particle size distribution of the supernatant obtained when 11θ has elapsed in Example 1 is shown in FIG. 7. From this particle size distribution, it is found that a 10% diameter is 2.628 µm, a 20% diameter is 3.307 µm, a 30% diameter is 3.355 µm, a 40% diameter is 3.618 µm, a 50% diameter is 3.901 µm, a 60% diameter is 4.210 µm, a 70% diameter is 4.546 µm, a 80% diameter is 4.909 µm, and a 90% diameter is 5.530 µm.

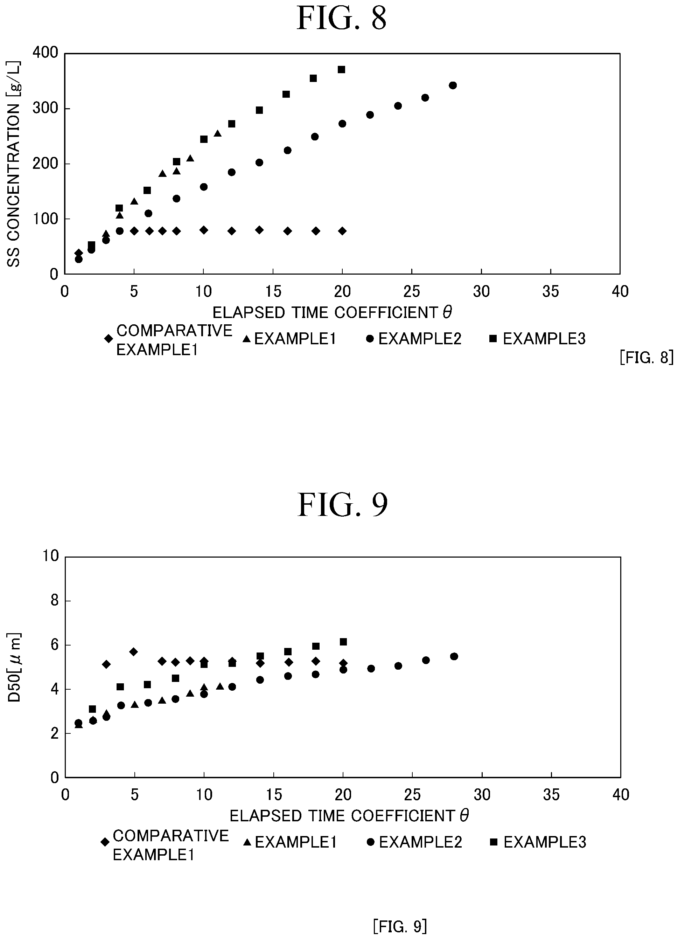

FIGS. 8, 9, and 10 show transitions of the SS concentration, a D50 value (median diameter), and particle size distribution evaluation index of (D90 - D10)/D50 value of the products obtained in Examples 1 to 3 and Comparative Example 1. The products of Examples 1 to 3 are slurry collected from the lower portion of the thickening reaction tank 13. In these products, the particle diameter also grows while the SS concentration increases with the elapse of time. In addition, it is found that the (D90 - D10)/D50 value is as small as less than 1, and the particles grow more uniformly.

In Comparative Example 1, the slurry discharged as the overflow was used as a product. When the elapsed time coefficient was 5 or more, the SS concentration and the particle diameter transition substantially constantly and more thickening and particle growth were not observed. In addition, the (D90 - D10)/D50 value is as large as about 1.2, and a broad particle size distribution is shown.

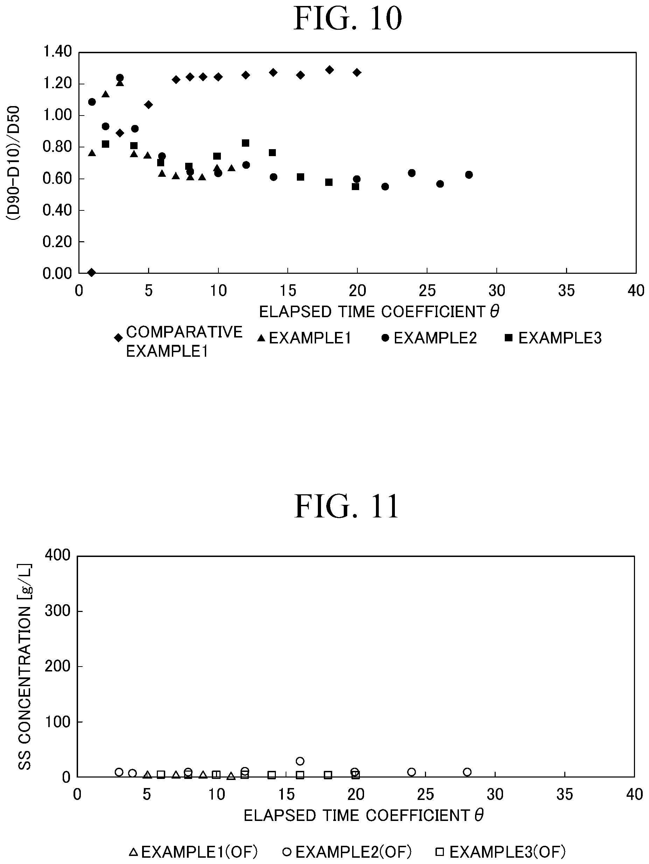

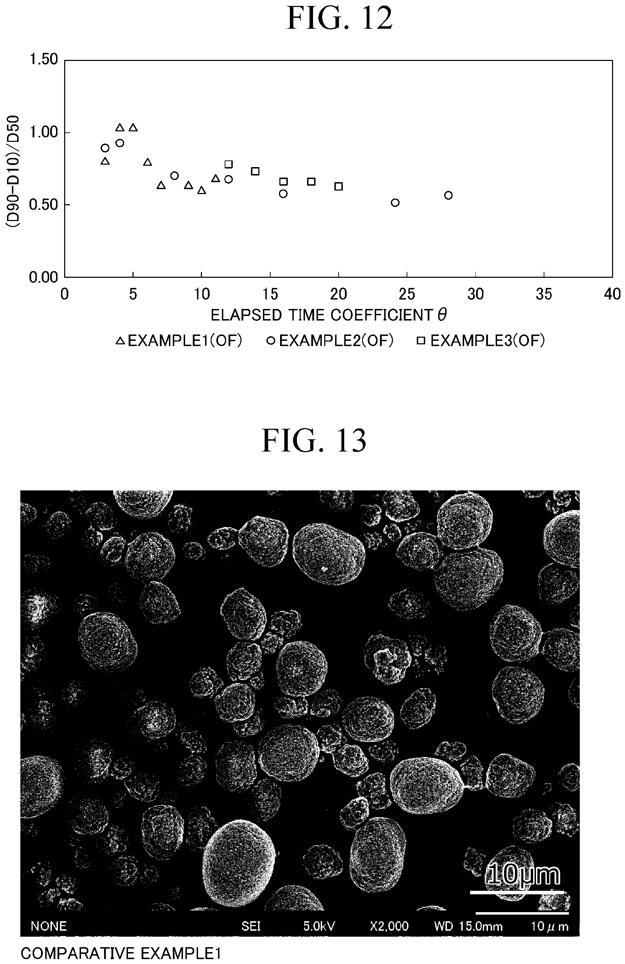

FIGS. 11 and 12 show transitions of the SS concentration and the particle size distribution evaluation index of (D90 - D10)/D50 value of the supernatant collected as the overflow in Examples 1 to 3. As described above, the sampling of the supernatant is started when the elapsed time coefficient is 3 or more. The results of the supernatant were shown as "Example 1 (OF)", "Example 2 (OF)", and "Example 3 (OF)" to be distinguished from the product. It is found that, although the SS concentration of the supernatant shown in FIG. 11 is lower than the SS concentration of the product shown in FIG. 8, the (D90 - D10)/D50 value of the supernatant shown in FIG. 12 is substantially the same as the (D90 - D10)/D50 value of each product shown in FIG. 10.

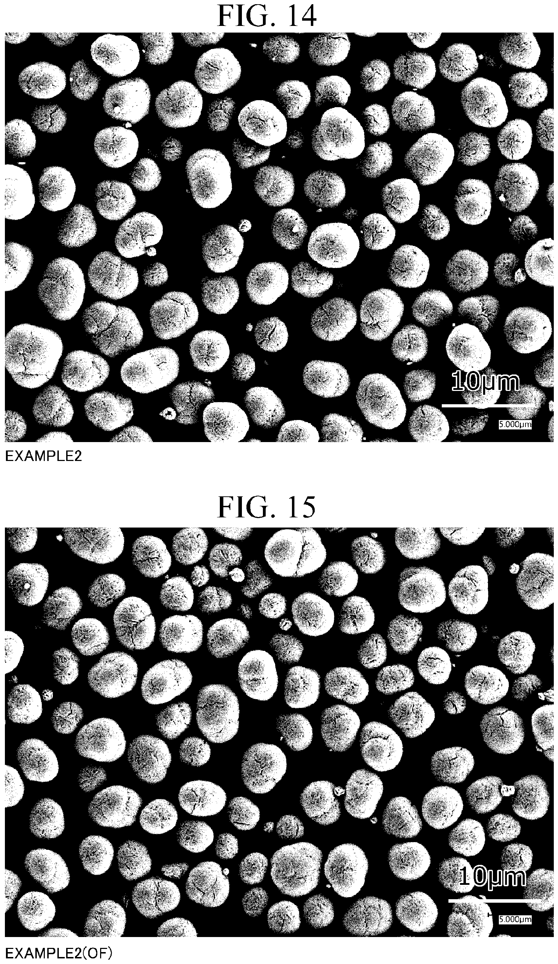

FIGS. 13, 14, and 15 show SEM data of the product of Comparative Example 1, the product of Example 2, and particles in the supernatant of Example 2. It is found that the product of Comparative Example 1 has relatively non-uniform particle diameters. In Example 2, it is found that the particle diameters are relatively uniform in both the product and the supernatant.

In Examples 2 and 3, the particle size distribution evaluation index (D90 - D10)/D50 value and the D50 value (median diameter) obtained by collecting the entire amount of the slurry discharged due to the overflow in the membrane thickening unit were as follows.

### Example 2: (D90 - D10)/D50 = 0.64, D50 = 4.7 µm

### Example 3: (D90 - D10)/D50 = 0.94, D50 = 4.1 µm

In addition, an SS collection rate collected in the overflow with respect to a total amount of solid content of the product was as follows.

### Example 2: SS collection rate of 21%

### Example 3: SS collection rate of 1.8%

As a separation function in a settling thickening operation is high, the amount of particles collected from the lower portion of the thickening reaction tank increases, and the amount of particles collected from the overflow decreases. The higher the separation function, the smaller the particle diameter. In a case where the separation function was relatively low, the amount of particles included in the overflow increased. Accordingly, the particles having a particle distribution close to that of a particle group in the slurry circulating the crystallization apparatus were collected from the overflow by the membrane thickening unit. Production management such as whether to increase or reduce the separation function can be appropriately determined according to the driving manipulation, the purpose of an object, and the like.

According to the analysis results of Examples 1 to 3, it was confirmed that, even when the concentration of the particle group changes between the upper portion and the lower portion of the thickening reaction tank, the particle size distribution configuring the particle group itself does not change. The reason why the particle group of the product obtained by the settling thickening and the particle group included in the supernatant have the same particle size distribution is not clear. However, the reason for that is considered as that a particle group with electrostatically aggregated particles is formed, or the particle group on the lower portion moves to a side of the upper portion to be uniform according to gas floating or heat convection in a liquid.

When the experiments were repeated under the conditions other than those in Examples 1 to 3, the same phenomenon applies even in a case of a broader particle size distribution, and the particle size distribution of the lower portion (high concentration) and the particle size distribution of the upper portion (low concentration) were the same.

Reference Document 1 below, which is available through J-STAGE operated by the Japan Science and Technology Agency (JST) discloses that an apparent particle size distribution almost does not change with a depth from a liquid surface, and when a concentration of a solid increases, the settling becomes slower due to interference of the particle group and the spread of distribution narrows.

Reference Document 1: Itsuma SEKIGUCHI et al., "Settling Behavior of Suspended Particles in the Hindered Settling Range (1st Report)", Journal of the Mining and Metallurgical Institute of Japan, vol. 91, No. 1053, 1975, pp. 721-726. https://www.jstage.jst.go.jp/article/shigentosozai1953/91/1053/91_1053_721/_article/-char/ja

A settling thickening tank can be designed by considering the rate of settling of the particles, the rate of rise of the supernatant, the rising flow due to gas, and the like. The rate of rise of the supernatant can be set by an area with respect to the supply amount of the raw materials. In a case where the rate of settling of static slurry particles is defined as v (m/s), the raw material inflow amount is defined as q (ml/min), the area is defined as A, and a margin value according to the rise of the gas flow is defined as α (a constant larger than 1), a necessary area A can be obtained as A > α· q/v. From the viewpoint of particle separation, it is preferable that the area A is sufficiently large, but the plane size of the settling thickening tank including the area A is determined in consideration of restrictions on installation equipment. For the height of the settling thickening tank, the restriction of the height of building is also considered. Although it is not possible to ensure sufficient area for the particle separation, the particle group can be thickened. In this case, by adding a particle collection operation such as a membrane separation operation at the subsequent stage, the SS collection rate can be improved while obtaining the settling thickening effect.

### (Reference Example 1)

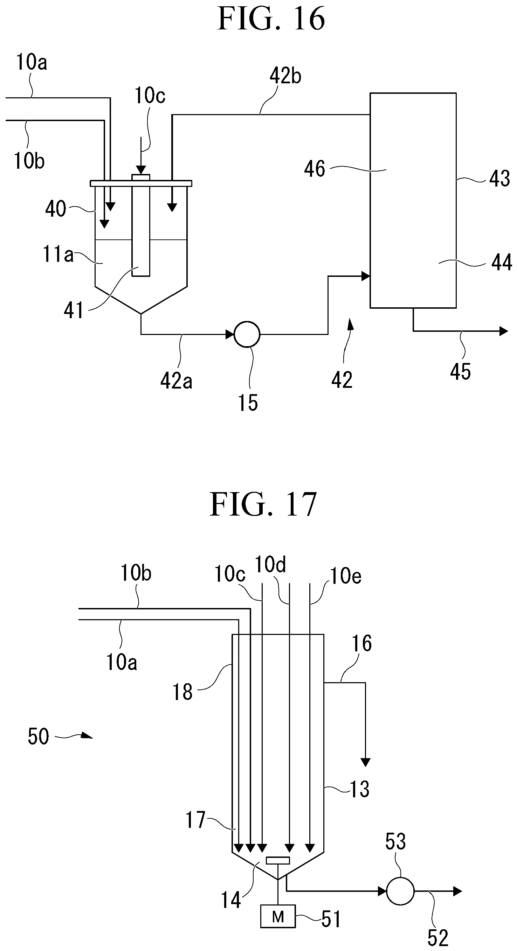

As shown in FIG. 16, it is also considered that the raw material liquids 10a, 10b, and 10c are supplied from the upper portion of the retention tank 40, and the obtained reaction solution 11a is sent to a settling separation discharge mechanism 43 from the lower portion of the retention tank 40 via a sending path 42a by the power of the circulation pump 15. In a lower portion 44 of the settling separation discharge mechanism 43, a thickened slurry in which a concentration of a solid content is increased to, for example, 8 wt% by the settling separation can be discharged from a discharge path 45. In an upper portion 46 of the settling separation discharge mechanism 43, a slurry in which the concentration of the solid content is, for example, about 2 wt%, can be returned to the retention tank 40 via a return path 42b.

### (Reference Example 2)

It is also considered to omit the main reaction unit 11 and the circulation path 12 of the crystallization apparatus 10. For example, as shown in FIG. 17, the raw material liquids 10a, 10b, and 10c may be supplied from the upper portion of the thickening reaction tank 13. The stirring zone 14 can be formed by installing a stirring device 51 in the lower portion of the thickening reaction tank 13. The stirring device 51 is not limited to a configuration of having a bearing in the lower portion, and may be installed by being suspended from an upper portion.

In the same manner as the crystallization apparatus 10 shown in FIG. 1, a crystallization apparatus 50 shown in FIG. 17 includes the overflow discharge passage 16 which discharges the overflow. Accordingly, the clarification zone 18 in which the supernatant is generated is formed in the upper portion of the thickening reaction tank 13. A thickening zone 17 in which particles are settled is formed between the stirring zone 14 and the clarification zone 18. The inside of the thickening reaction tank 13 is vertically divided into the stirring zone 14, the thickening zone 17, and the clarification zone 18. The reaction is carried out only in the stirring zone 14.

A discharge path 52 that extracts the slurry using the power of a discharge pump 53 is connected to the lower portion of the thickening reaction tank 13. The lower end portion of the thickening reaction tank 13 may have a funnel shape. A cross-sectional shape of the thickening zone 17 and the clarification zone 18 may be a cylindrical shape continuous with the same shape vertically. An inner surface of the thickening reaction tank 13 in the thickening zone 17 and the clarification zone 18 may have a tapered, may be flat, or may be formed with irregularities or the like. In order to improve settling performance, for example, a settling device such as an inclined tube or an inclined plate may be provided in the thickening zone 17 or the clarification zone 18.

### [Industrial Applicability]

It is possible to provide a crystallization method and a crystallization apparatus capable of suppressing a range of a particle size distribution and performing stable driving of a device, even when a thickening operation is performed during reaction crystallization.

### [Reference Signs List]

H: Height from lower end of thickening reaction tank to inflow path
L: Height from lower end of thickening reaction tank to overflow level
Ls: Liquid level at start
Lt: Overflow level
Vs: Volume in thickening reaction tank at start of reaction crystallization
Vt: Volume in thickening reaction tank increased after start of reaction crystallization
10: Crystallization apparatus
11: Main reaction unit
11a: Reaction solution
12: Circulation path
12a: Inflow path
12b: Outflow path
13: Thickening reaction tank
14: Stirring zone
15: Circulation pump
16: Overflow discharge passage
17: Thickening zone
18: Clarification zone

## Claims

1. A crystallization method comprising forming a circulation path between a main reaction unit and a thickening reaction tank, and performing reaction crystallization,
wherein the circulation path includes an inflow path from the main reaction unit to the thickening reaction tank, and an outflow path from the thickening reaction tank to the main reaction unit,
a stirring zone to which the inflow path and the outflow path are connected is provided in a lower portion of the thickening reaction tank,
a clarification zone in which a supernatant is generated is provided in an upper portion of the thickening reaction tank, and
a thickening zone in which particles are settled is provided between the stirring zone and the clarification zone.

2. The crystallization method according to Claim 1,
wherein a ratio LID of a height L from a lower end of the thickening reaction tank to an overflow level to a diameter D of the thickening reaction tank is in a range of 2 to 20.

3. The crystallization method according to Claim 1 or 2,
wherein a liquid level in the thickening reaction tank gradually rises while performing the reaction crystallization, and the thickening zone and the clarification zone are formed in a middle of a step of the reaction crystallization.

4. The crystallization method according to Claim 3,
wherein a ratio Vt/Vs of a volume Vt in the thickening reaction tank increased after start of the reaction crystallization to a volume Vs in the thickening reaction tank at the start of the reaction crystallization is greater than 1.

5. The crystallization method according to one of Claims 1 to 4,
wherein a ratio H/L of a height H from a lower end of the thickening reaction tank to the inflow path to a height L from the lower end of the thickening reaction tank to an overflow level is less than 20% in terms of a percentage.

6. A crystallization apparatus which forms a circulation path between a main reaction unit and a thickening reaction tank, and performs reaction crystallization,
wherein the circulation path includes an inflow path from the main reaction unit to the thickening reaction tank, and an outflow path from the thickening reaction tank to the main reaction unit,
a stirring zone to which the inflow path and the outflow path are connected is provided in a lower portion of the thickening reaction tank,
a clarification zone in which a supernatant is generated is provided in an upper portion of the thickening reaction tank, and
a thickening zone in which particles are settled is provided between the stirring zone and the clarification zone.

7. The crystallization apparatus according to Claim 6,
wherein a ratio LID of a height L from a lower end of the thickening reaction tank to an overflow level to a diameter D of the thickening reaction tank is in a range of 2 to 20.

8. The crystallization apparatus according to Claim 6 or 7,
wherein a ratio H/L of a height H from a lower end of the thickening reaction tank to the inflow path to a height L from the lower end of the thickening reaction tank to an overflow level is less than 20% in terms of a percentage.
